# EUROPÄISCHE PATENTSCHRIFT

(11) **EP 0 660 271 B1**
(45) Veröffentlichungstag und Bekanntmachung des Hinweises auf die Patenterteilung: **12.05.1999**
(21) Anmeldenummer: 94109870.9
(22) Anmeldetag: 27.06.1994
(51) Int. Cl.: G07C 1/26, G07C 1/24

(54) **Einrichtung zum Erfassen von Ereignissen, insbesondere beim Brieftaubensport**
Event registration device, especially for homing pigeon sport
Dispositif d'enregistrement d'événements, en particulier pour sport colombophile

(30) Priorität: 22.12.1993 DE 9319760 U; 13.04.1994 DE 4412620
(43) Veröffentlichungstag der Anmeldung: 28.06.1995
(73) Patentinhaber: Diehl Ident GmbH, 90478 Nürnberg (DE)
(72) Erfinder: Maul, Ludwig, D-92237 Sulzbach-Rosenberg (DE); Geisslinger, Klaus, D-91227 Leinburg (DE); Wietrzynski, Bolko, D-91207 Lauf/Peg. (DE)
(74) Vertreter: Hofmann, Gerhard, Dipl.-Ing. Patentassessor

(56) Entgegenhaltungen:
- EP-A- 0 064 787
- EP-A- 0 118 141
- EP-A- 0 544 277
- EP-A- 0 582 138
- DE-U- 9 116 282
- DE-U- 9 305 746

## Beschreibung

Die Erfindung betrifft eine Einrichtung zum Erfassen von Ereignissen, insbesondere beim Brieftaubensport.

Eine solche Einrichtung zum manipulationssicheren Erfassen von Ereignissen, insbesondere von Identinformationen beim Brieftaubensport mit berührungslosem Auslesen der Kennungsträger von Teilnehmern und Zwischenspeicherung derer Identinformationen ist in der EP-A-0 544 277 beschrieben. Auf zweckmäßige Antennen zum berührungslosen Auslesen der Identinformation aus dem Teilnehmer-Kennungsträger wird in der DE-U-93 05 746 eingegangen. Für einen Teil der hier benannten Vertragsstaaten stellt die prioritätsältere aber nachveröffentlichte EP-A-0 582 138 Stand der Technik dar hinsichtlich der auch im Rahmen von Weiterbildungen zu vorliegender Erfindung wieder berücksichtigten Teilaspekte der gerätetechnischen Trennung zwischen Erfassen und Zwischenspeichern der echtzeit-verknüpften Identinformationen mit der Maßgabe, diese im hier sogenannten Bediengerät zwischengespeicherten Informationen zwar auslesen aber nicht unmittelbar verarbeiten zu können; weil die Informationsverarbeitung - etwa zum Erstellen von Siegerlisten - in einem zentral, unter gesonderter Aufsicht betriebenen Auswertegerät erfolgt. Die Zwischenspeicherung weist dabei apparativ den besonderen handhabungstechnischen Vorteil auf, das räumlich der Antenneninstallation zugeordnete Lesegerät nach dem Abnehmen des Bediengerätes dort belassen zu können, also nicht ebenfalls für die Datenübergabe körperlich mit zum Auswertegerät verbrin- gen zu müssen. Außerdem ist in jener älteren Anmeldung bereits berücksichtigt, daß die Echtzeit-Information zweckmäßigerweise aus einer Quarzuhr gewonnen wird, die aus Gründen der Manipulationssicherheit nur von Zeit zu Zeit - und nicht gerade während des Einlesens von Identinformationen in den Zwischenspeicher - mittels einer Funkuhr auf die amtliche Zeit synchronisiert wird

Was in den genannten Publikationen vorwiegend für den Wettkampf- und insbesondere für den Brieftaubensport beschrieben ist, läßt sich apparativ aber darüber hinaus auch vorteilhaft im Rahmen der Zugangskontrolle und der Materialwirtschaft einsetzen, etwa um den Materialtransport hinsichtlich individueller Gegenstände im Zuge der Fertigung oder der Auslieferung von Waren erfassen und später auch noch rekonstruieren zu können.

Wenn es um eindeutige Zuordnung bestimmter Datensätze zu individuellen lebenden oder toten Objekten geht, dann ist es nicht damit getan, diese Objekte (Personen oder Sachen) selbst eindeutig (etwa durch einen bestimmten Nummernkreis) zu identifizieren. Denn durch Übertragungsfehler, aber auch infolge Manipulations- bis hin zu Sabotageversuchen, können die Identifizierungen bzw. ihnen spezifisch zuzuordnende Ergänzungsinformationen verfälscht sein; wobei eine Verfälschung auch schon darin liegen kann, daß aufgrund späterer Manipulationen im Datenbestand die abgespeicherte Daten-Reihenfolge gegenüber der real aufgetretenen Daten-Reihenfolge verändert wird. Wenn solche Fehler und Manipulationsversuche nicht wenigstens nachträglich eindeutig als solche erkannt werden können, dann ist die Einrichtung gattungsgemäßer Art nicht im erforderlichen Umfang fälschungssicher und somit für zahlreiche Einsatzwecke nicht geeignet; insbesondere wenn es auch auf nachträgliche Dokumentationsmöglichkeit und Weiterverarbeitung des Datenanfalles ankommt, wie etwa beim Sport, aber auch bei sicherheitstechnischen Zugangskontrollen oder z. B. bei der ordnungsrechtlich ausgestalteten Abfallbeseitigung.

Der Erfindung liegt deshalb die technische Problematik zugrunde, eine Einrichtung gattungsgemäßer Art derart auszugestalten, daß Veränderungen im Datenbestand als solche erkennbar sind, um z. B. die entsprechenden Daten von der regulären Weiterbehandlung ausnehmen zu können.

Diese Aufgabe ist erfindungsgemäß im wesentlichen dadurch gelöst, daß die gattungsgemäße Einrichtung auch die Teilmerkmale des Kennzeichnungsteiles des Hauptanspruches aufweist.

Nach jener Lösung kann apparativ und räumlich sowie organisatorisch zwischen einem Erfassungsbereich, einem Zwischenspeicherbereich und einem Verarbeitungsbereich unterschieden werden. Der Erfassungsbereich umfaßt ein Lesegerät mit seinen Antennen zur berührungslosen Abfrage von Kennzeichnungsträgern. Dabei unterscheiden sich durch eine elektrische Kennung die Antennen bzw. Lesegeräte zur Registrierung z. B. der gemeldete Teilnehmer eines Wettbewerbs an einer zentralen Einsatzstelle von denjenigen, die am Ziel (z. B. am Heimatschlag einer Brieftaube) die Ankunft eines Teilnehmers erfassen. Dadurch kann später sichergestellt werden, daß nur zuvor gemeldete ("eingesetzte") Teilnehmer auch in die Siegerauswertung eingehen. Jede Identinformation, die von der Antenne geliefert wird, wird im Lesegerät mit einer Sicherungsinformation verknüpft, und diese Kombination ist danach nicht mehr änderbar. Die Sicherungsinformation kann aus einer fortlaufenden Hintergrundinformation herausgegriffen oder aus einer Pseudo-Zufallsgesetzmäßigkeit abgeleitet sein oder einfach eine nummernmäßige Reihenfolge darstellen; vorzugsweise enthält sie eine Reihenfolgeinformation in Form des bei der Erfassung gegebenen, aktuellen Zeitpunktes. Ein späteres Hinzufügen einer weiteren Identnummer würde also zwangsläufig daran erkennbar sein, daß die Gesetzmäßigkeit der Entwicklung der Sicherungsinformation durchbrochen ist, beispielsweise weil der abgeschlossen gewesene Umfang des eingesetzten Datensatzes erweitert ist oder der hinzugefügte Datensatz außerhalb des einheitlichen Einsatz-Zeitblockes liegt. Die fortlaufende Zeitinformation wird von einer eingebauten Quarzuhr geliefert. Um alle mit Identinformationen verknüpften Zeiten absolut miteinander vergleichen zu können, findet ab und zu eine Synchronisation der Quarzuhr auf die (gesetzliche) Zeit statt, wie sie über den Langwellenempfänger einer Funkuhr aufgenommen und dekodiert werden kann. Wenn die Synchronisation zu einer bemerkenswerten Zeitkorrektur der Quarzuhr führt (etwa in der Größenordnung von mindestens einer Sekunde), dann wird das gesondert protokolliert, weil möglicherweise an der Quarzuhr ein Defekt oder eine Manipulation aufgetreten war. Während des Wettkampf-Einlaufs ist die Funkuhr zweckmäßigerweise abgeschaltet, damit nur die kontinuierlich ablaufende Quarzzeit der Einlauf-Erfassung zugeordnet wird; außerdem ist so sichergestellt, daß während des Einlaufs nicht womöglich eine externe Uhrenmanipulation über einen Störsender erfolgen kann. Das Lesegerät mit seinen Antennen kann für ständige oder intermittierende Nutzung am Erfassungsort aufgestellt bzw. fest installiert sein, und es verbleibt in der Regel dort, also z. B. in der Einsatzstelle oder aber beim Taubenschlag bzw. sonstigen Zieleinlauf.

Für die Zwischenspeicherung ist ein transportables (hier sogenanntes Bedien-) Gerät vorgesehen, das der Aufnahme und gegebenenfalls Darbietung der vom Lesegerät gelieferten, also schon ergänzten Ident-Informationen dient; aber nur der Abspeicherung der Informationen in ihrer aufgenommenen Reihenfolge, noch nicht einer weiteren Verarbeitung. Für letztere muß das handlich ausgelegte und deshalb leicht transportierbare Bediengerät an ein zentral betriebenes und gesondert überwachtes Auswertegerät überbracht werden, in das die eingespeicherte Datenfolge für die weitere Verarbeitung (beispielsweise zur Erstellung für Preislisten oder Müllabfuhrrechnungen) ausgelesen wird.

Da keinerlei Einspeisung in das Bediengerät außer vom Lesegerät her und keinerlei Ausgabe der darin zwischengespeicherten Datensätze außer unmittelbar in das autorisierte Auswertegerät vorgesehen ist, ist sichergestellt, daß die erfaßten Datensätze zwar informationshalber am Bediengerät angeschaut und auch zur Dokumentation komplett oder teilweise ausgedruckt werden können, aber keinerlei Veränderung erfahren, also später im aufgenommenen Originalzustand unmittelbar an das autorisierte Auswertegerät übergeben werden.

Zur Sicherung gegen etwaige Manipulationen werden die Ident-Informationen von den erfaßten Objekten verschlüsselt an das Lesegerät und von diesem abermals verschlüsselt an das Bediengerät übertragen. Die eine Verschlüsselung wird vom Lesegerät durch einen hier aktuell erzeugten Code vorgegeben, so daß auch durch etwaiges Anzapfen der Verbindungsleitung keine Erkenntnisse über den Inhalt der momentanen Datenübertragung gewinnbar sowie keine externen Daten wirksam einspeisbar sind. In gleicher Weise erzeugt das Bediengerät einen aktuellen Verschlüsselungs-Code beim Abrufen der Daten aus dem Lesegerät. Darüberhinaus können die Daten, zusätzlich zur Realzeit-Verknüpfung im Lesegerät, noch eine Hintergrundmodulation erfahren, die auch eine etwaige spätere Umstellung in der Daten-Reihenfolge erkennen läßt. Auffallende Abweichungen der Zeitinformation aus der internen Uhrenschaltung im Vergleich zur durch die Funkuhr gelieferten gesetzlichen Zeit werden gesondert erfaßt und zusätzlich (z. B. im betroffenen Datensatz) dokumentiert, so daß es auch nicht möglich ist, unauffällig die interne Uhr zu verstellen und damit die Zeitbasis im Vergleich zu anderen Echtzeit-Datenerfassungssystemen zu verschieben.

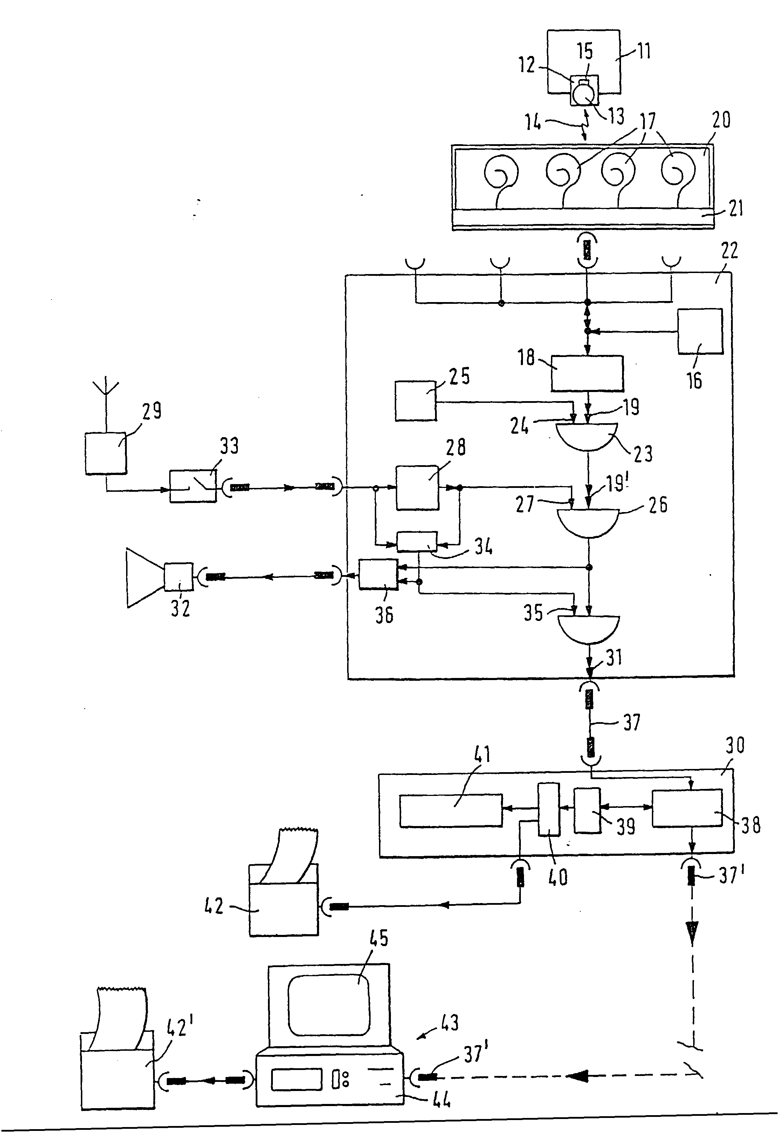

Zusätzliche Alternativen und Weiterbildungen sowie weitere Merkmale und Vorteile der Erfindung ergeben sich aus den weiteren Ansprüchen und, auch unter Berücksichtigung der Darlegungen in der Zusammenfassung, aus nachstehender Beschreibung eines in der Zeichnung unter Beschränkung auf das Wesentliche als einpoliges Blockschaltbild stark abstrahiert skizzierten bevorzugten Realisierungsbeispiels zur erfindungsgemäßen Lösung. Die einzige Figur der Zeichnung zeigt ein Bediengerät, das zur Aufnahme von Informationen entweder an ein Lesegerät oder stattdessen an ein Auswertegerät für die Verarbeitung der aufgenommenen Informationen angeschlossen werden kann.

Jedes zu erfassende Objekt 11, etwa ein individuelles Lebewesen als Teilnehmer eines Wettkampfes oder eine individuelle Sache im Zuge der Passage vorbestimmter Orte, ist mit einem es individualisierenden Kennungsträger 12 ausgestattet. Der weist eine Spule 13 auf, in welcher mittels eines induktiven Hochfrequenz-Feldes 14 eine Spannung zum Betrieb einer Schaltung 15 zum Auslesen eines abgespeicherten Binärmusters induziert wird. In diesem Rhythmus wird die Spule 13 bedämpft. Daraus resultiert in der von einer Hochfrequenz-Quelle 16 gespeisten magnetischen Antenne 17 im gleichen Rhythmus eine Amplitudenschwankung, die von einem Wandler 18 in eine digitale Ident-Information 19 umgesetzt wird.

Um mehrere Objekte 11 quasi gleichzeitig erfassen zu können, sind mehrere Antennen 17 apparativ zu einem Erfassungsgerät 20 zusammengefaßt. Leiteinrichtungen zwischen den einzelnen Antennen 17 bewirken, daß jede Antenne 17 höchstens einen Objekt-Kennungsträger 12 gleichzeitig erfassen kann, so daß keine zeitliche Überlagerung von unterschiedlichen Identinformationen 19 an einer Antenne 17 vorkommt. Ein Umschalter 21 dient zur Multiplex-Abfrage der Antennen 17. An ein Lesegerät 22 können mehrere solcher Erfassungsgeräte 20 angeschlossen werden. Der Eingangsspeicher des Wandlers 18 nimmt dann etwa von verschiedenen Erfassungsgeräten 20 zeitlich überlappend auftretende Informationen vor der seriellen Ausgabe zur Zwischenspeicherung parallel auf.

Jedes Objekt 11 ist durch die in seine Leseschaltung 15 eingespeicherten Identinformation in Form etwa eines Zahlen- und/oder Buchstaben-Codes eindeutig identifiziert. Wenn dieser Code nicht unmittelbar als Binärinformation zur Bedämpfung der Spule 13 herangezogen, sondern zuvor mit einem Zufallscode verschlüsselt wird, ist sichergestellt, daß die vom Lesegerät 22 aufzunehmende Ident-Information 19 nicht dadurch vorgetäuscht werden kann, daß jemand das magnetische Antennenfeld 14 mit einer bestimmten Information bedämpft; denn für eine wirksame Manipulation müßte auch der aktuelle Verschlüsselungscode bekannt sein, ohne den später die Entschlüsselung der Identinformation nicht mehr möglich ist.

Der aktuelle Zugang einer neuen Echtzeit-Identinformation 31 (aufgrund momentaner Erfassung eines Objektes 11 mittels einer der Antennen 17) kann zur Betriebsüberwachung von einem optischen und/oder akustischen Signalgeber 32 signalisiert werden.

Jede von der Antenne 17 codiert an das Lesegerät übermittelte Ident-Information 19 wird hierin mittels einer Kombinationsschaltung 26 um eine Echtzeitinformation 27 ergänzt. Diese wird von einer autonom arbeitenden und vorzugsweise quarzstabilisierten internen Uhrenschaltung 28 geliefert. Eine bei autonomen Uhren nie ganz auszuschließende Langzeit-Gangabweichung gegenüber dem tatsächlichen Zeitablauf wird in größeren Abständen überprüft und gegebenenfalls mittels eines Zeitempfängers 29 korrigiert. Der empfängt quasi-kontinuierlich die, beispielsweise über einen Langwellen-Sender ausgestrahlten, Telegramme der gesetzlichen Zeit, demoduliert sie und korrigiert danach gegebenenfalls eine abweichende aktuelle Zeitangabe der Uhrenschaltung 28. Dadurch ist sichergestellt, daß die vom Lesegerät 22 dann abermals codiert an ein Bediengerät 30 ausgegebene echtzeit-gesicherte Identinformation 31 stets eine Verknüpfung der aktuell erfaßten Ident-Information 19 mit der aktuell zutreffenden Zeitinformation 27 erfährt.

Insbesondere bei einem batteriebetriebenen System wird man wegen der hohen Konstanz der stabilisiert betriebenen Uhrenschaltung 28 den Zeitempfänger 29 nicht stets in Betrieb halten müssen. Es genügt, ihn von Zeit zu Zeit-etwa einmal täglich - in Betrieb zu setzen bzw. an das Lesegerät 22 anzuschalten, was in der Zeichnung durch einen Schalter 33 veranschaulicht ist. Wenn in der Empfangspause nicht gerade ein Sommerzeit-Winterzeit-Wechsel stattgefunden hat, und wenn die Uhrenschaltung 28 ordnungsgemäß arbeitet, dann liegen deren zu korrigierende Zeitabweichungen allenfalls in der Größenordnung von Sekunden-Bruchteilen, was für die Bewertung der Echtzeit-Identinformationen 31 ohne Bedeutung ist. Wenn sich beim vorübergehenden Zuschalten des Zeitempfängers 29 allerdings ein größerer Korrekturbedarf herausstellt, etwa wegen einer Funktionsstörung der autarken Uhrenschaltung 28, dann spricht eine Vergleichsschwelle 34 an, um die (korrigierte) Echtzeit-Identinformation 31 mit einer Hinweisinformation 35 zu ergänzen. Bei dieser kann es sich einfach um eine Marke handeln, die bei der späteren Datenauswertung eine Warnung hinsichtlich der Zuverlässigkeit der aktuellen Information auslöst; oder es wird der konkrete Zahlenwert angegeben, um den die aus der Uhrenschaltung 28 gelieferte Zeitinformation 27 vom Zeitempfänger 29 korrigiert wurde. Wenn die Zeit-Vergleichsschwelle 34 zusätzlich dafür ausgelegt ist, mit der Hinweisinformation 35 die Nachricht zu übermitteln, daß beim Zuschalten des Zeitempfängers 29 keine (oder jedenfalls keine nennenswerte) Korrektur der Zeitinformation 27 aus der Uhrenschaltung 28 erforderlich war, dann kann aus der im Bediengerät 30 abgespeicherten Folge der Echtzeit-Identinformationen 31 schon aufgrund dieses Zusatzes später festgestellt werden, welche Ident-Informationen 19 zeitlich auf jeden Fall korrekt erfaßt wurden, und in welcher Erfassungszeitspanne aufgrund von Störungen Fehlangaben aufgetreten sein können.

Fehlzeiten können insbesondere dadurch hervorgerufen werden, daß ein Saboteur mit einem Störsender ein falsch kodiertes Zeitprogramm in einen Empfänger 29 einstrahlt und dadurch die freilaufende interne Uhrenschaltung 28 jedenfalls vorübergehend verstellt. Ein solcher Sabotageakt wäre aber wegen des Zeitsprunges, der beim automatischen Nachstellen der internen Quarzuhr auftritt, später z. B. aus einer Zusatzinformation (Hinweis 35) in der Folge der abgespeicherten Echtzeit-Identinformationen 31 eindeutig ersichtlich. Es kann darüberhinaus vorgesehen sein, aus der Zeit-Vergleichsschwelle 34 den Signalgeber 32 über einen Modulator 36 anzusteuern, um etwa durch an- und abschwellende Töne den Betreiber des Systemes darauf aufmerksam zu machen, daß jüngst eine außergewöhnliche Abweichung in der Zeitinformation 27 aufgetreten ist, um das System sofort kontrollieren und den Fremdeingriff möglicherweise dingfest machen zu können. Solche externen Einwirkungen auf die Zeitinformation 27 im Identprotokoll lassen sich in der Praxis aber einfach dadurch ausschließen, daß der Zeitempfänger 29 eine gewisse Zeitspanne vor Beginn der Übernahme einer Serie von Identinformationen 19 vorübergehend eingeschaltet wird, woraufhin während der Datenerfassung diese aktuell und zuverlässig gestellte Uhrenschaltung 28 dann entark ohne externe Beeinflußbarkeit weiterläuft. Nach Abschluß der Datenerfassung, etwa am Abend eines Wettkampftages, wird der Zeitempfänger 29 zur Kontrolle erneut eingeschaltet. Mit einer ebenfalls zur Kontrolle eingespeisten speziellen Information wird die dann gegebenenfalls auftretende Hinweisinformation 35 verknüpft, so daß am Ende des im Bediengerät 30 abgespeicherten Protokolls über die der Reihe nach aufgenommenen Identinformationen 19 eine eindeutige Aussage darüber verfügbar ist, ob die registrierten Zeitinformationen 27 ohne Sprünge kontinuierlich durchliefen.

Im Lesegerät 22 kann die empfangene Ident-Information 19 zusätzlich zur Echtzeit-Zuordnung mit einer fortlaufenden Hintergrundinformation 24 aus einem Signalgenerator 25 unterlegt werden. Sollten später so modifizierte Ident-Informationen 19' durch Löschung oder Austausch manipuliert werden, dann würde in der verbleibenden Folge der Ident-Informationen 19' die Hintergrundinformation 24 nicht mehr kontinuierlich enthalten sein, sondern Lücken oder Sprünge aufweisen. Das läßt sich bei der Auswertung der Informationen 19' leicht detektieren, um insoweit die Auswertung zu sperren oder zumindest mit Markierungen zu versehen, durch welche die Ergebnisse hinsichtlich ihrer Gültigkeit wegen möglicher Manipulationseingriffe relativiert werden.

Die im Lesegerät 22 erfaßten, verarbeiteten und kombinierten Informationen werden als gesicherte Identinformationen 31 erneut, nun vom Bedienungsgerät 30 aus verschlüsselt, z. B. über Steckerkabel 27 an das Bediengerät 30 übermittelt und darin über eine Weiche 38 in der Reihenfolge ihres Eingangs in einem nichtflüchtigen Speicher 39 abgelegt. Über ein manuell bedienbares Interface 40 kann der gesamte Inhalt des Speichers 39 oder ein aus der Folge der abgespeicherten Echtzeit-Informationen 31 ausgewählter Teil zur optischen Darbietung auf einem Display 41 und/oder zur Protokollierung auf einem extern anschließbaren Drucker 42 abgerufen werden. Dabei werden aber nicht die vollständigen Identinformationen der Kennungsträger ausgegeben, sondern nur daraus abgeleitete Angaben, die zwar zur Objekt-Identifizierung aber nicht zur Imitation der kompletten Information ausreichen. Ferner kann die Objektzuordnung zu einer übergeordneten Klassifizierung angezeigt werden (etwa zur Tauben-Verbandsringnummer), wenn diese beim Objekt-Einsatz zusätzlich eingespeichert wurde. Durch die codierte, direkte Übertragung vom Lesegerät 22 an das Bediengerät 30, etwa über ein kurzes Steckerkabel 37, und durch die Sicherungsmaßnahmen in Form der fortlaufenden Zeit- und gegebenenfalls Hintergrundinformationen 27, 24 - sowie gegebenenfalls zusätzlich durch eine Hinweisinformation 35 auf irreguläre Zeitsprünge - ist gewährleistet, daß jedenfalls keine verdeckten Manipulationen im Inhalt des Speichers 39 enthalten sind. Außerdem wird bei jedem Datensatz dokumentiert, über welche Antenne 17 bzw. welches Lesegerät 22 er gewonnen wurde. So ist kontrollierbar, daß ein abgeschlossener, zeitlich dicht gestaffelter Satz von Identinformationen 19 mit einer Einsatzstellen-Antenne 17 aufgenommen wurde, während hinsichtlich Datums und/oder Uhrzeit dagegen versetzt und zeitlich über eine größere Zeitspanne verteilt eine Zieleinlauf-Antenne 17 die gleichen Identinformationen 19 in anderer Reihenfolge lieferte.

Ebenfalls aus Gründen der Manipulationssicherheit ist vorgesehen, im Bediengerät 30 ausschließlich die über die Antennen 17 eingelesenen Folgen von Identinformationen 19 (wie vorstehend erläutert ergänzt zu gesicherten Informationen 31) unverändert abzuspeichern, aber nicht weiter zu verarbeiten. Hierfür ist vielmehr ein zentrales Auswertegerät 43 vorgesehen, in dessem Rechner 44 speziell geprüfte und zugelassene Programme für die konkret anstehende Datenaufbereitung betrieben werden, etwa zur Ermittlung einer Wettkampf-Rangfolge nicht nur unter Berücksichtigung des Einlauf-Zeitpunktes der einzelnen Teilnehmer (personifizierten Objekte 11), sondern auch beispielsweise unter Berücksichtigung besonderer Bonus-oder Malus-Vorgaben zum Leistungsausgleich einzelner zu diesem Wettbewerb eingesetzter (gemeldeter) Teilnehmer-Identnummern (Informationen 19). So werden also nur und erst in dem zentralen Auswertegerät 43 - welches etwa im Vereinslokal einer Brieftauben-Reisevereinigung betrieben wird - aus den in verschiedenen Bediengeräten 30 unter Echtzeit-Zuordnung abgespeicherten Identinformationen 31 die Siegerlisten, Wettergebnisse und Preistabellen erstellt und beispielsweise auf einem Bildschirm 45 angezeigt oder mittels eines Druckers 42 dauerhaft dokumentiert.

Ebenfalls um sicherzustellen, daß Übertragungsfehler oder gar Manipulationen ausgeschaltet sind, werden die einzelnen über ihre Weichen 38 in das zentrale Auswertegerät 43 einzulesenden Bediengeräte 30 nicht etwa über Modems und Telefonleitungen miteinander gekoppelt; sondern jedes zur Daten-Zwischenspeicherung eingesetzte Bediengerät 30 muß vom Lesegerät 22 getrennt und dann körperlich zum zugeordneten zentralen Auswertegerät 43 verbracht werden, wo der Inhalt seines Speichers 39 (etwa mittels eines anderen Steckerkabels 37') zur weiteren Verarbeitung abgerufen wird. Dabei werden auch die aktuellen Zeiten (nach Datum und Uhrzeit) der internen Uhrenschaltungen 28 der zur Auswertung gebrachten Bediengeräte 30 miteinander verglichen, um etwaige auffällige Abweichungen in einem der Geräte dokumentieren zu können.

Außerdem wird im Zuge der Datenübergabe ans Auswertegerät 43 oder später in diesem überprüft, daß nur zuvor eingesetzte Identnummern später auch im Eingang erfaßt wurden, also keine etwa gar nicht zum Wettbewerb gemeldeten Individuen in die Auswertung gelangen. Solche Abweichungen dürfen nur vorkommen, wenn das Wettkampf-Kommitee den Kennungsträger 12 eines stichprobenhaft herausgegriffenen Objektes 11 nach seinem Einsatz zu Kontrollzwecken ausgetauscht (und das beweiskräftig dokumentiert) hat: Diese ursprünglich eingesetzte Identinformation 31 darf beim späteren Zieleinlauf natürlich nicht wieder auftreten.

Mit der Datenübergabe kann zugleich ein Kennzeichnen oder Löschen der Daten im Speicher 39 bewirkt oder wenigstens vorbereitet werden, um sicherzustellen, daß die einmal von einem bestimmten Bediengerät 30 in das zentrale Auswertegerät 43 eingelesenen Echtzeit-Identinformationen 31 nicht hier oder anderweitig noch ein zweites Mal eingespeist werden können.

## Patentansprüche

1. Einrichtung zum manipulationssicheren Echtzeit-Erfassen der Identinformationen (19) von zuvor angemeldeten Teilnehmern, insbesondere beim Brieftaubensport, wobei die Identinformationen (19) von Teilnehmer-Kennungsträgern (12) zur Zwischenspeicherung mittels unterschiedlicher Arten von Lesegeräten (22) berührungslos erfaßbar sind, die einsatzabhängig unterscheidbare Kennungen liefern.

2. Einrichtung nach Anspruch 1,
dadurch gekennzeichnet,
daß aus dem abgespeicherten Identinformationen (19) erkennbar ist, ob sie Einsatzinformationen oder Zielinformationen darstellen.

3. Einrichtung nach Anspruch 1 oder 2,
dadurch gekennzeichnet,
daß ein Bediengerät (30) an ein Lesegerät (22) anschließbar ist, welches seinerseits an wenigstens eine Antenne (17) angeschlossen ist, über die objektspezifische Identinformationen (19) geliefert werden, die vor Übergabe an das Bediengerät (30) im Lesegerät (22) mit Sicherungsinformationen verknüpft werden.

4. Einrichtung nach Anspruch 1, 2 oder 3,
dadurch gekennzeichnet,
daß vor dem Lesegerät (22) mehrere Antennen (17) zu einem Erfassungsgerät (20) mit Antennen-Umschalter (21) zusammengefaßt und mehrere Erfassungsgeräte (20) auf einen Parallel-Serien-Zwischenspeicher im Lesegerät (22) schaltbar sind, mit gegenseitiger mechanischer Abschottung des Erfassungsbereiches der einzelnen Antennen (17) eines Erfassungsgerätes (20).

5. Einrichtung nach Anspruch 3 oder 4,
dadurch gekennzeichnet,
daß das Bediengerät (30) einen aktuellen Verschlüsselungs-Code beim Abrufen von Daten aus dem Lesegerät (22) erzeugt.

6. Einrichtung nach einem der vorangehenden Ansprüche,
dadurch gekennzeichnet,
daß im Bediengerät (30) gesicherte Identinformationen (31) in ihrer aufgenommenen und abgespeicherten Reihenfolge mittels aus den Identinformationen (19) des Kennungsträgers (12) abgeleiteter Objektinformationen anzeigbar sind.

7. Einrichtung nach einem der vorangehenden Ansprüche,
dadurch gekennzeichnet,
daß die Informationsübernahmen, des Lesegerätes (22) von den Antennen (17) bzw. des Bediengerätes (30) vom Lesegerät (22), vom Lesegerät (22) bzw. vom Bediengerät (30) aus gesteuert und aktuell verschlüsselt sind.

8. Einrichtung nach einem der vorangehenden Ansprüche,
dadurch gekennzeichnet,
daß im Bediengerät (30) anzeigbare Identinformationen (19) parallel vergebenen Objektnummern zugeordnet sind.

9. Einrichtung nach einem der vorangehenden Ansprüche,
dadurch gekennzeichnet,
daß das aktuelle Erfassen einer neuen Echtzeit-Identinformation (19) durch einen Signalgeber (32) signalisierbar ist.

10. Einrichtung nach einem der vorangehenden Ansprüche,
dadurch gekennzeichnet,
daß mit Datenübergabe von einem Zwischenspeicher (Bediengerät 30) in das Auswertegerät (43) die aktuell zwischengespeicherten Echtzeit-Identinformationen (19) im Zwischenspeicher (Bediengerät 30) gelöscht werden.

## Claims

1. Device for the manipulation-proof real-time acquisition of items of identification information (19) of previously entered competitors, in particular in respect of pigeon racing, the items of identification information (19) being acquired without contact for temporary storage from competitors' identification carriers (12) by means of different types of reading device (22), which deliver distinguishable identification signals depending on the application.

2. Device according to Claim 1,
characterized in that
it can be recognized from the stored items of identification information (19) whether they represent items of information relating to entry or items of information relating to destination.

3. Device according to Claim 1 or 2,
characterized in that
a control unit (30) can be connected to a reading device (22) which in turn is connected to at least one antenna (17) by way of which object-specific items of identification information (19) are delivered, which are combined in the reading device (22) with items of safeguarding information prior to delivery to the control unit (30).

4. Device according to Claim 1, 2 or 3,
characterized in that,
in front of the reading device (22), several antennas (17) are combined to form a data-acquisition unit (20) with antenna change-over switch (21), and several data-acquisition units (20) can be connected to a parallel-serial temporary store in the reading device (22), with reciprocal mechanical compartmentalization of the acquisition zones of the individual antennas (17) of a data-acquisition unit (20).

5. Device according to Claim 3 or 4,
characterized in that
the control unit (30) produces an actual enciphering code when calling up data from the reading device (22).

6. Device according to one of the preceding claims,
characterized in that
items of identification information (31) safeguarded in the control unit (30) can be displayed in the order of their reception and storage by means of items of object information derived from the items of identification information (19) of the identification carrier (12).

7. Device according to one of the preceding claims,
characterized in that
the acceptance of information, by the reading device (22) from the antennas (17) or else by the control unit (30) from the reading device (22), is controlled and actually encoded by the reading device (22) or by the control unit (30).

8. Device according to one of the preceding claims,
characterized in that
items of identification information (19) which can be displayed in the control unit (30) are allocated parallel object numbers.

9. Device according to one of the preceding claims,
characterized in that
the actual acquisition of a new real-time item of identification information (19) can be indicated by a signal transmitter (32).

10. Device according to one of the preceding claims,
characterized in that,
with the transfer of data from a temporary store (control unit 30) into the evaluation unit (43), the actual temporarily stored real-time items of identification information (19) in the temporary store (control unit 30) are erased.

## Revendications

1. Dispositif pour l'enregistrement en temps réel protégé contre la fraude des informations d'identification (19) de participants préalablement inscrits, en particulier dans les compétitions de pigeons voyageurs, les informations d'identification (19) de supports d'identification (12) des participants pouvant être enregistrées sans contact en vue de la mémorisation intermédiaire au moyen de différents types de lecteurs, qui fournissent des identifications pouvant être différenciées indépendamment du départ.

2. Dispositif selon la revendication 1, caractérisé en ce qu'à partir des informations d'identification (19) mémorisées, on peut savoir s'il s'agit d'informations relatives au départ ou relatives à l'arrivée.

3. Dispositif selon la revendication 1 ou 2, caractérisé en ce qu'un appareil de service (30) peut être raccordé à un lecteur (22) qui de son côté est raccordé à au moins une antenne (17), par laquelle sont fournies des informations d'identification (19) spécifiques de l'objet qui sont corrélées dans le lecteur (22) à des informations de sécurité, avant d'être transmises à l'appareil de service (30).

4. Dispositif selon les revendications 1, 2 ou 3 caractérisé en ce qu'avant le lecteur (22) plusieurs antennes (17) sont réunies en un appareil de détection (20) avec commutateur d'antenne (21) et plusieurs appareils de détection (20) peuvent être raccordés à une mémoire intermédiaire parallèle-série dans le lecteur (22) avec cloisonnement mécanique réciproque de la zone de détection des différentes antennes (17) d'un appareil de détection (20).

5. Dispositif selon la revendication 3 ou 4, caractérisé en ce que l'appareil de service (30) produit un code actuel lors de l'interrogation de données contenues dans le lecteur (22).

6. Dispositif selon l'une des revendications précédentes, caractérisé en ce que dans l'appareil de service (30) peuvent être indiquées des informations d'identification (31) dans l'ordre de leur enregistrement et mémorisation, au moyen d'informations d'objet dérivées des informations d'identification (19) du support d'identification (12).

7. Dispositif selon l'une des revendications précédentes, caractérisé en ce que les réceptions d'informations du lecteur (22) par les antennes (17) ou de l'appareil de service (30) par le lecteur (22) sont commandées et codifiées de manière actuelle respectivement à partir du lecteur (22) et de l'appareil de service (30).

8. Dispositif selon l'une des revendications précédentes, caractérisé en ce qu'à des informations d'identification (19), pouvant être indiquées dans l'appareil de service (30), sont associés des numéros d'objet attribués en parallèle.

9. Dispositif selon l'une des revendications précédentes, caractérisé en ce que la détection actuelle d'une nouvelle information d'identification en temps réel (19) peut être signalée par un transmetteur de signaux (32).

10. Dispositif selon l'une des revendications précédentes, caractérisé en ce que lors du transfert de données d'une mémoire intermédiaire (appareil de service (30) dans l'appareil d'évaluation (43), des informations d'identification en temps réel (19), mémorisées de manière intermédiaire et actuelle, sont effacées dans la mémoire intermédiaire (appareil de service 30).
